# FASCICULE DE BREVET EUROPEEN

(11) **EP 1 277 396 B1**
(45) Date de publication et mention de la délivrance du brevet: **15.02.2006**
(21) Numéro de dépôt: 02356138.4
(22) Date de dépôt: 10.07.2002
(51) Int. Cl.: A01J 25/16

(54) **Installation mécanisée pour l'égouttage de fromages en cours de fabrication**
Automatische, mechanische Anlage zur Entwässerung von Käse während der Fabrikation
Automatized installation for draining cheese during manufacture

(30) Priorité: 17.07.2001 FR 0109547
(43) Date de publication de la demande: 22.01.2003
(73) Titulaire: CHALON MEGARD, 01460 Montreal la Cluse (FR)
(72) Inventeur: Megard, Pierre, 01130 Nantua (FR); Caldognetto, Michel, 01130 Nantua (FR); Megard, Matthieu, 01460 Montreal La Cluse (FR)
(74) Mandataire: Bratel, Gérard

(56) Documents cités:
- EP-A- 0 134 013
- FR-A- 2 269 465
- FR-A- 2 629 305

## Description

La présente invention concerne une installation mécanisée pour le traitement des fromages, durant la phase de fabrication d'importance primordiale qui est l'égouttage des fromages, cette installation s'appliquant plus particulièrement à la fabrication des fromages du type dit à « pâtes molles ».

En règle générale, l'égouttage des fromages en cours de fabrication s'effectue soit dans des blocs-moules sans fond, posés sur des supports grillagés dits « stores » eux-mêmes supportés par des plateaux, soit dans des blocs-moules avec fonds, les blocs-moules étant dans tous les cas disposés les uns sur les autres pour former des piles. Les piles de blocs-moules sont posées sur des pieds de base, et sont placées à l'intérieur de chambres d'égouttage, où elles séjournent un certain temps, lesdites chambres d'égouttage étant équipées de systèmes de climatisation qui permettent d'en régler la température et l'humidité.

En cours d'égouttage, les blocs-moules doivent être retournés de temps en temps. Dans le cas de blocs-moules supportés par des plateaux, si ces derniers sont à simple face, le retournement se fait plateau par plateau, tandis que, si les plateaux sont à double face, donc réversibles, le retournement se fait par piles complètes. Dans le cas de blocs-moules à fonds, le retournement se fait toujours par piles. De nombreux retournements sont nécessaires pendant l'égouttage.

Une exigence primordiale des lignes de production fromagère, dans la phase d'égouttage, est le respect d'une régularité parfaite de la température de l'ensemble des fromages, régularité qui ne peut être obtenue qu'au moyen d'une circulation parfaitement homogène de l'air, lui-même à température et humidité parfaitement régulières, de façon à obtenir en fin d'égouttage, lors du démoulage, des fromages avec des écarts-types les plus réduits possibles et des caractéristiques physiques les plus homogènes possibles.

On connaît aussi des installations mécanisées, dans lesquelles les piles de blocs-moules sont placées à l'intérieur de « tunnels d'égouttage », climatisés le mieux possible, dans lesquels ces piles de blocs-moules circulent le long de voies de déplacement adaptées, le retournement des piles de blocs-moules étant réalisé à l'extérieur desdits tunnels. Une installation mécanisée de ce genre, bien connue, est décrite dans la demande de brevet européen EP 0 134 013 A.

Dans cette installation connue, la circulation de l'air est assurée par un ventilateur particulier pour chaque emplacement occupé par une pile de blocs-moules, ce qui nécessite, pour l'ensemble de l'installation, un très grand nombre de ventilateurs, et ce qui complique et renchérit l'installation. De plus, les températures obtenues ne sont pas véritablement homogènes, car l'air est recyclé pile par pile, en passant sur des tubes d'échangeurs de chaleur dont la température n'est pas parfaitement uniforme sur toute la longueur du tunnel d'égouttage, et l'on se trouve ici, en réalité, en présence de multiples systèmes de climatisation pratiquement indépendants les uns des autres, en nombre identique au nombre de piles de blocs-moules stockées dans le tunnel d'égouttage.

Par ailleurs, dans cette installation connue, le réglage de l'humidité, qui est un paramètre important de l'égouttage, peut difficilement être pris en compte, car cela nécessiterait un grand nombre de buses d'injection de brouillard d'eau, l'ensemble étant alors très difficile à contrôler.

De plus, le retournement des piles de blocs-moules s'effectuant à l'extérieur du tunnel d'égouttage, des ouvertures très fréquentes et plus ou moins longues de ce tunnel sont nécessaires, pour en extraire les piles de blocs-moules à retourner, et pour y réintroduire les piles retournées. Comme on le comprend facilement, ces ouvertures répétées, qui mettent l'intérieur de l'installation en communication avec l'atmosphère extérieure, perturbent la climatisation du tunnel d'égouttage.

Une autre installation mécanisée pour l'égouttage de fromages en cours de fabrication, avec enceinte climatisée, est décrite dans le document FR 2629305 A. Là aussi, le retournement des fromages s'effectue à l'extérieur du tunnel d'égouttage. De plus, le retournement s'effectue individuellement, pour des claies précédemment dépilées, qui doivent ensuite être à nouveau empilées.

En ce qui concerne la climatisation de l'enceinte, le document FR 2629305 A prévoit un appareillage logé au-dessus du plafond de l'enceinte, des caissons de refoulement déposés longitudinalement vers les parois latérales de l'enceinte, et un caisson central d'aspiration. En conséquence de cette disposition, l'air circule horizontalement et transversalement, au travers des moules empilés. Cette solution est admissible dans le cas, prévu par ce document, de claies ou plateaux qui supportent chacun un bloc-moule sans fond, et elle peut être rendue nécessaire dans le cas où les plateaux constituent un obstacle total au passage d'un flux d'air vertical. Par contre, dans le cas habituel de blocs-moules constitués par un ensemble de moules unitaires, reliés entre eux par soudure et aussi, pour des raisons de manutention, par des éléments plats ou barrettes soudés sur les moules extérieurs, le passage horizontal de l'air est pratiquement impossible, car l'air buterait sur de nombreux obstacles, et en particulier sur tous les moules extérieurs. Cet air ne pourrait donc atteindre les moules situés à l'intérieur des piles de blocs-moules et, de ce fait, la température ne serait pas uniforme pour l'ensemble des fromages à égoutter.

Enfin, le document FR 2269465 A décrit un dispositif de retournement et d'entreposage de fromages, mais il ne s'agit pas d'un "tunnel d'égouttage", ce dispositif étant utilisé à un stade ultérieur qui est l'affinage des fromages. Ce dispositif ne traite pas des piles de blocs-moules, ni même des moules, mais seulement des plateaux coulissants sur lesquels reposent librement les fromages. Enfin, le système de ventilation selon ce document fait circuler l'air horizontalement, au-dessus des fromages, en soufflant cet air sur un côté et en l'aspirant sur le côté opposé ; de ce point de vue, le système de ventilation est assimilable à celui du document précédent.

La présente invention vise à éliminer les inconvénients des installations mécanisées actuelles, et elle a donc pour but la réalisation d'un tunnel d'égouttage permettant d'obtenir une ventilation particulièrement régulière et efficace des fromages en cours d'égouttage, en s'adaptant à la structure des blocs-moules, avec maintien d'une température et d'une humidité très homogène, et en évitant aussi les retournements à l'extérieur du tunnel d'égouttage de manière à ne pas perturber la climatisation.

A cet effet, l'invention a pour objet une installation mécanisée pour l'égouttage de fromages en cours de fabrication, cette installation étant du genre « tunnel d'égouttage » avec une enceinte climatisée prévue pour recevoir des piles de blocs-moules positionnées et déplaçables le long de voies de déplacement, cette installation étant caractérisée par le fait qu'elle comprend, à l'opposé d'une extrémité de l'enceinte pourvue d'une porte d'entrée pour le chargement/déchargement des piles de blocs-moules, une unité de climatisation avec ventilateurs, buses de pulvérisation d'eau et batterie de chauffage/refroidissement, l'unité de climatisation assurant la reprise de l'air à une extrémité d'un espace libre inférieur s'étendant sur la longueur de l'enceinte, sous les emplacements occupés par les piles de blocs-moules, et ladite unité de climatisation possédant, en partie haute, une sortie en communication avec une chambre de répartition d'air située en partie haute du tunnel d'égouttage, la chambre de répartition étant délimitée à sa base par des panneaux perforés ou des grilles de diffusion d'air surmontant les emplacements occupés par les piles de blocs-moules.

Cet agencement permet d'obtenir une répartition très homogène de l'air à travers les piles de blocs-moules, qui séjournent à l'intérieur du tunnel d'égouttage, donc d'obtenir un égouttage très régulier des fromages, ceci par des moyens simples et compacts, donc économiques, comprenant essentiellement une unité de climatisation à ventilateurs incorporés, intégrée à une extrémité de l'installation, la répartition de l'air sur les piles de blocs-moules stockées ne nécessitant pas d'autres ventilateurs. La circulation de l'air, s'effectuant verticalement et de haut en bas dans les "cheminées" verticales qui existent entre les colonnes de moules, ne rencontre pas d'obstacle, ce qui contribue à la régularité de la répartition de l'air. II en résulte une homogénéité de la température et de l'humidité, d'une pile de blocs-moules à une autre, et aussi à l'intérieur de chaque pile de blocs-moules, donc pour tous les fromages en cours d'égouttage.

Dans une forme de réalisation préférée de l'invention, l'installation comprend, pour la conduite automatique de l'égouttage, un dispositif de pesée des piles de blocs-moules à l'intérieur de l'enceinte climatisée, et une sonde de température/hygrométrie située dans la chambre de répartition d'air. La pesée des piles de blocs-moules, à des moments successifs, donne une indication précise de l'évolution de l'égouttage dans le temps, et permet de faire varier automatiquement, en fonction de cette évolution, les paramètres de fonctionnement que sont la température, l'hygrométrie et la vitesse de passage de l'air fourni par l'unité de climatisation et circulant à travers les piles de blocs-moules, la température et l'hygrométrie étant elles-mêmes contrôlées à partir de la sonde correspondante.

Avantageusement, l'installation pour l'égouttage de fromages, objet de l'invention, comprend encore un retoumeur motorisé, placé à l'intérieur de l'enceinte climatisée sur le circuit de déplacement des piles de blocs-moules, pour le retournement automatique de chaque pile de blocs-moules. Ce retoumeur automatique, placé à l'intérieur du tunnel d'égouttage, évite les sorties et rentrées des piles de blocs-moules pour effectuer leur retournement, durant tout le processus d'égouttage, et il permet ainsi de ne pas perturber la climatisation de l'enceinte dans laquelle séjournent les piles de blocs-moules.

Dans une forme de réalisation avantageuse de l'invention, le circuit de déplacement des piles de blocs-moules, à l'intérieur de l'enceinte climatisée, est un circuit fermé qui comprend un premier chariot de transfert à déplacement transversal, situé à l'extrémité de l'enceinte pourvue de la porte d'entrée, un second chariot de transfert à déplacement transversal situé vers l'extrémité opposée de l'enceinte, pourvue de l'unité de climatisation, un convoyeur longitudinal « aller » et un convoyeur longitudinal « retour », le dispositif de pesée étant associé au premier chariot de transfert, et le retourneur étant placé entre ce premier chariot de transfert et l'extrémité amont du convoyeur longitudinal « aller ». Les piles de blocs-moules décrivent ainsi un circuit rectangulaire, à l'intérieur de l'enceinte climatisée, les piles de blocs-moules étant pesées et retournées à chaque tour de ce circuit.

Selon un mode de réalisation particulier, les convoyeurs longitudinaux « aller » et « retour », pour le transfert des piles de blocs-moules, sont des convoyeurs du type pas à pas, à lignes de galets ou à chaînes, prévus pour positionner et déplacer les piles de blocs-moules à une hauteur prédéterminée, avec une distance verticale faible, en partie haute, entre les panneaux perforés ou grilles de diffusion d'air, d'une part, et les sommets des piles de blocs-moules, d'autre part. Cette faible distance verticale contribue aussi à l'homogénéité de la répartition de l'air.

Enfin, on notera que l'installation pour l'égouttage de fromages, objet de l'invention est avantageusement utilisable avec un robot de transfert extérieur équipé d'un chariot porte-piles, pour le chargement/déchargement des piles de blocs-moules au travers de la porte d'entrée de l'enceinte climatisée, le robot de transfert étant de préférence commun à plusieurs tunnels d'égouttage disposés parallèlement.

L'invention sera mieux comprise à l'aide de la description qui suit, en référence au dessin schématique annexé représentant, à titre d'exemple, une forme d'exécution de cette installation mécanisée pour l'égouttage de fromages en cours de fabrication.
Figure 1 est une vue en plan par dessus d'une installation d'égouttage conforme à la présente invention ;
Figure 2 est une vue en coupe verticale longitudinale de l'installation de la figure 1 ;
Figure 3 est une vue en coupe verticale transversale, et à plus grande échelle, de cette installation.

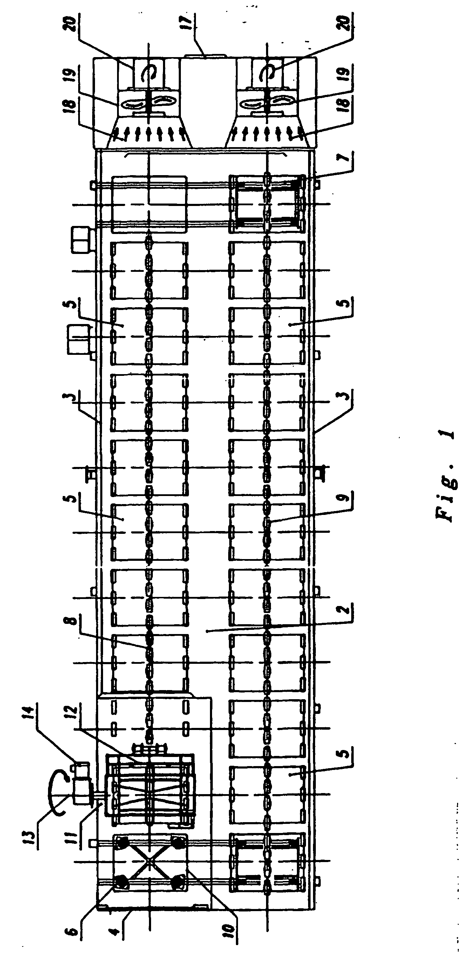

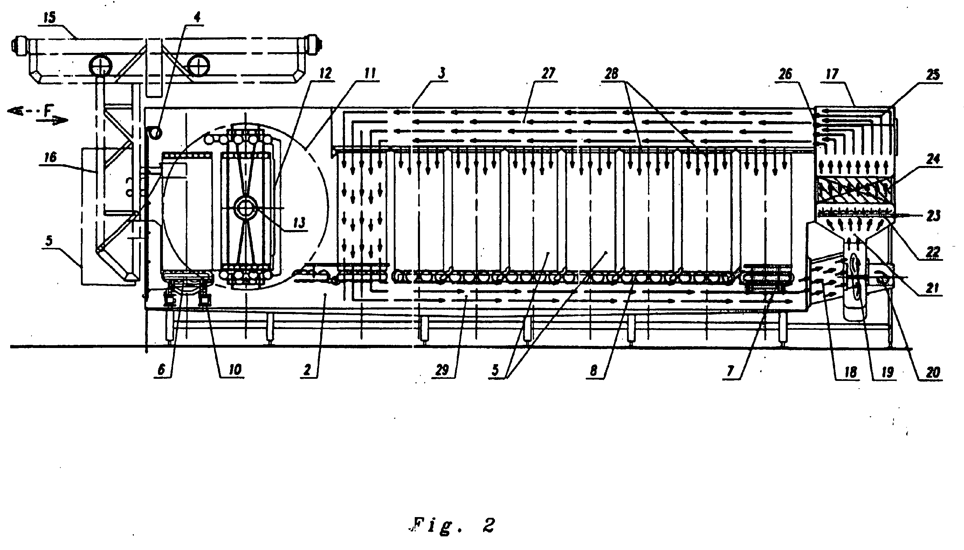

Les figures 1 et 2 montrent, dans son ensemble, l'installation d'égouttage désignée aussi comme « tunnel d'égouttage ». Cette installation se présente comme une enceinte fermée 2, de forme allongée, délimitée par des parois 3 en acier inoxydable. A l'une de ses extrémités, le tunnel d'égouttage est pourvu d'une porte d'entrée 4, à fonctionnement automatique, prévue pour l'introduction et l'extraction de piles de blocs-moules 5.

Dans l'enceinte 2 est prévu un circuit de déplacement des piles de blocs-moules 5, incluant: un premier chariot de transfert 6 situé à l'extrémité pourvue l'enceinte 2 de la porte d'entrée 4, un second chariot de transfert 7 situé à l'extrémité de opposée de l'enceinte 2, un convoyeur longitudinal « aller » 8 et un convoyeur longitudinal « retour » 9.

Le premier chariot de transfert 6 est déplaçable transversalement, de manière à pouvoir être aligné avec le convoyeur « aller » 8 ou avec le convoyeur « retour » 9. Ce chariot de transfert 6 est lui-même placé sur un dispositif de pesée 10.

Le second chariot de transfert 7 est, lui aussi, déplaçable transversalement, de manière à pouvoir être aligné avec le convoyeur « aller » 8 ou avec le convoyeur « retour » 9.

Les convoyeurs « aller » 8 et « retour » 9 sont des convoyeurs de type pas à pas, disposés parallèlement l'un à l'autre et reliant les deux extrémités de l'enceinte 2. Il peut s'agir de convoyeurs à galets ou à chaînes, en acier inoxydable. A son point de départ, situé face à la porte d'entrée 4, le convoyeur « aller » 8 est précédé d'un retoumeur 11, avec une cage 12 montée rotative autour d'un axe horizontal 13, et avec un moto-réducteur 14 d'entraînement en rotation de la cage 12.

Une pluralité de tunnels d'égouttage, ainsi constitués sur le plan mécanique, peuvent être disposés parallèlement, et être alimentés en piles de blocs-moules 5 au moyen d'un même robot de transfert 15, circulant en direction transversale devant les extrémités d'entrée de tous ces tunnels d'égouttage - voir figure 2. Le robot de transfert 15 est équipé d'un chariot porte-piles 16, apte à supporter une pile de blocs-moules 5 au moyen de fourches (non représentées en détail), le chariot 16 étant déplaçable longitudinalement par rapport au châssis principal du robot de transfert 15. Un tel robot 15 peut charger et décharger un groupe d'environ six à huit tunnels, au maximum.

A son extrémité opposée à la porte d'entrée 4, le tunnel d'égouttage comporte une unité de climatisation 17, laquelle comprend :
- deux larges conduits 18 de reprise d'air, situés face aux extrémités des deux convoyeurs 8 et 9, vers le fond et à la base de l'enceinte 2 ;
- deux ventilateurs 19 placés, respectivement, face aux deux conduits 18, et entraînés par des moteurs respectifs 20 ;
- au-dessus des ventilateurs 19, sur le refoulement 21 de ceux-ci, des buses de pulvérisation d'eau 22, alimentées en eau depuis l'extérieur (flèche 23) ;
- une batterie de chauffage/refroidissement 24, placée au-dessus des buses de pulvérisation d'eau 22 ;
- enfin, au-dessus de la batterie 24, un caisson 25 de refoulement de l'air traité, avec une sortie 26 située face à la partie supérieure de l'enceinte 2.

(voir en particulier la figure 2).

La partie haute du tunnel d'égouttage forme une chambre de répartition d'air 27, délimitée à sa base par des panneaux horizontaux 28 percés de multiples trous. La sortie 26 du caisson de refoulement 25 de l'unité de climatisation 17 débouche dans la chambre de répartition d'air 27, à une extrémité frontale de celle-ci.

On note aussi la présence, dans la partie basse de l'enceinte 2, sous les deux convoyeurs 8 et 9, d'un espace libre inférieur 29 pour circulation de l'air, s'étendant sur toute la longueur de cette enceinte 2, et sur une hauteur suffisante, jusqu'à l'entrée des conduits de reprise d'air 18.

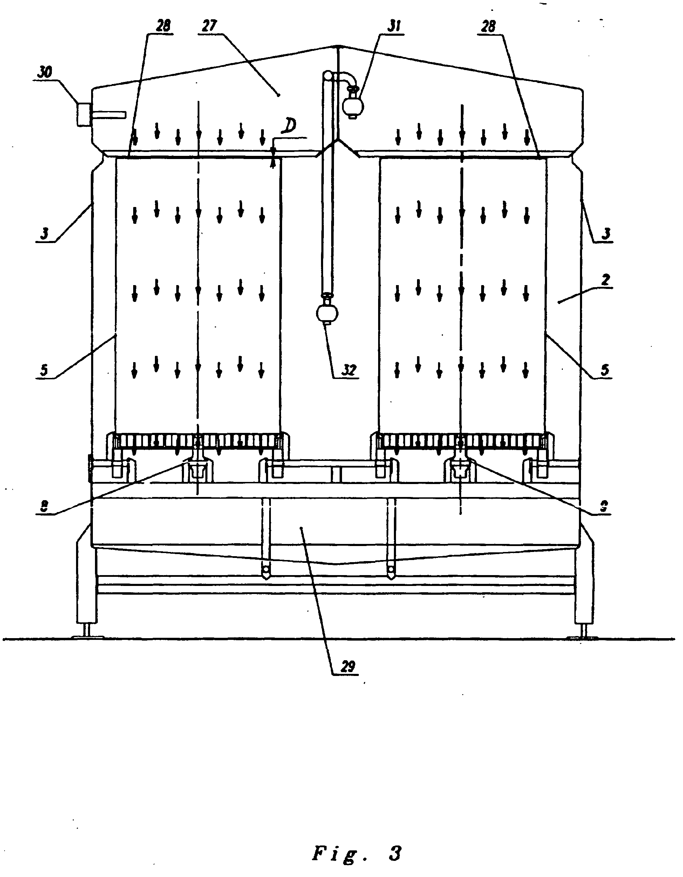

Enfin, en se référant à la figure 3, l'installation comprend encore une sonde multifonctions 30, pour détection de la température et de l'hygrométrie, cette sonde 30 étant située dans la chambre de répartition d'air 27.

Le dimensionnement de l'installation est tel que les piles de blocs-moules 5, posées à hauteur fixe et déplacées sur les convoyeurs « aller » 8 et « retour » 9, ont leur sommet situé à une faible distance verticale D sous les panneaux horizontaux 28 qui délimitent, à sa base, la chambre de répartition d'air 27 - voir les figures 2 et 3.

Le fonctionnement du tunnel d'égouttage, précédemment décrit, se déroule de la façon suivante :
Les piles de blocs-moules 5, préalablement formées, sont amenées devant le groupe de tunnels d'égouttage concerné, au moyen du robot de transfert 15. Ce robot 15 est arrêté devant le tunnel d'égouttage à alimenter, dans l'axe de la porte d'entrée 4 de ce tunnel. Le chariot 16 du robot de transfert 15, supportant une pile de blocs-moules 5 au moyen de ses fourches, effectue un déplacement longitudinal (flèche F sur la figure 2) permettant à la pile 5 de pénétrer à l'intérieur de l'enceinte 2 du tunnel d'égouttage, au travers de la porte d'entrée 4 alors automatiquement ouverte, la pile 5 étant toujours supportée par les fourches. Ensuite, un mouvement de descente desdites fourches permet de déposer la pile de blocs-moules 5 sur le premier chariot de transfert 6, alors positionné en face de la porte d'entrée 4.
Une fois posée sur le chariot de transfert 6, la pile de blocs-moules 5 qui vient d'être introduite dans le tunnel est pesée au moyen du dispositif de pesée 10 associé à ce chariot 6, et son poids est enregistré.
Le chariot 16 du robot de transfert 15 est ensuite reculé (mouvement de sens inverse de la flèche F), la porte d'entrée 4 se referme et, au moyen d'un dispositif de transfert à fonctionnement du type pas à pas, la pile de blocs-moules 5 précédemment reçue sur le premier chariot de transfert 6 est transférée dans la cage rotative 12 du retoumeur 11. L'actionnement du moto-réducteur 14 permet alors de faire décrire à la cage 12 une rotation de 180° autour de l'axe horizontal 13, de telle sorte que la pile de blocs-moules 5, placée dans ladite cage 12, subit un premier retournement.
Après retournement, la pile de blocs-moules 5 considérée est de nouveau déplacée horizontalement vers l'avant, pour dégager le retourneur 11. Cette pile 5 parvient ainsi à l'extrémité amont du convoyeur « aller » 8.
Au fur et à mesure de leur entrée dans l'enceinte 2, assurée par le robot de transfert 15, les piles de blocs-moules 5 suivent le même processus. Les piles de blocs-moules 5 s'accumulent ainsi, les unes derrière les autres, sur le convoyeur « aller » 8, qui avance pas à pas pour recevoir successivement les nouvelles piles 5 introduites.
Une fois le convoyeur « aller » 8 garni sur toute sa longueur de piles de blocs-moules 5, ces piles 5 sont progressivement transférées sur le convoyeur « retour » 9, au moyen du second chariot de transfert 7. Le tunnel d'égouttage peut ainsi être entièrement rempli de piles de blocs-moules 5. Ces piles de blocs-moules 5 circulent à l'intérieur du tunnel d'égouttage, en décrivant un mouvement rectangulaire dans un plan horizontal, décomposé comme suit :
   - déplacement longitudinal « aller », sur le convoyeur « aller » 8 ;
   - déplacement transversal sur le second chariot de transfert 7 ;
   - déplacement longitudinal « retour », sur le convoyeur « retour » 9 ;
   - déplacement transversal sur le premier chariot de transfert 6, ramenant les piles de blocs-moules 5 à leur point de départ, pour commencer un nouveau cycle.

A chaque retour vers le point de départ, donc à chaque tour de ce circuit, et avant d'entamer un nouveau tour, les piles de blocs-moules 5 sont de nouveau pesées sur le dispositif de pesée 10 associé au premier chariot de transfert 6, et sont retournées par le retoumeur 11.

Au cours de ce processus de circulation et de retournement des blocs-moules 5, et pour assurer une hygrométrie et une température parfaitement régulières et uniformes à l'intérieur de l'enceinte 2, l'unité de climatisation 17 reprend l'air dans la partie basse du tunnel d'égouttage, au niveau de l'espace libre 29, fait passer cet air à travers les buses de pulvérisation d'eau 22 et la batterie de chauffage/refroidissement 24, et propulse l'air ainsi « traité » dans la chambre de répartition 27. Les panneaux perforés 28 assurent la diffusion de l'air sur chaque pile de blocs-moules 5 séjournant dans l'enceinte 2.

L'air ainsi dirigé sur chaque pile de blocs-moules 5 la traverse verticalement de haut en bas, et parvient de nouveau dans l'espace libre inférieur 29, le circuit fermé parcouru par l'air étant bien illustré sur la figure 2 (voir les flèches symbolisant le flux d'air).

Ce mode de fonctionnement permet d'obtenir un égouttage pratiquement parfait des fromages placés dans les blocs-moules, regroupés en piles 5, avec une conduite automatique de l'égouttage contrôlée à partir des informations suivantes :
- variations de poids (dans le temps) de chaque pile de blocs-moules 5, données par le dispositif de pesée 10 ;
- température à l'intérieur de la chambre de répartition d'air 27, donnée par la sonde de température/hygrométrie 30 ;
- hygrométrie fournie par la sonde température/hygrométrie 30 placée dans la chambre de répartition d'air 27.

Sur la base de ces informations, l'automatisme de conduite de l'égouttage agit en continu sur les paramètres de réglage de l'air de climatisation : hygrométrie, température, vitesse de circulation de cet air, et il commande aussi des retournements des piles de blocs-moules 5 aussi fréquents qu'il est nécessaire, de façon à obtenir un égouttage aussi régulier que possible, dans toute la masse des fromages.

Après un séjour d'une durée adaptée (par exemple d'environ vingt heures) dans le tunnel d'égouttage, les piles de blocs-moules 5, avec leurs fromages égouttés, sont successivement extraites de l'enceinte 2 au moyen du robot de transfert 15, au travers de la porte d'entrée 4. Pour chaque pile 5 extraite, lès blocs-moules sont dépilés de façon à isoler les blocs-moules élémentaires, desquels les fromages égouttés sont eux-mêmes extraits par un procédé de démoulage sous vide.

De plus, il est procédé périodiquement, par un procédé du type « nettoyage en place », à un lavage de l'ensemble de l'installation d'égouttage, y compris son unité de climatisation 17, au moyen de boules de nettoyage rotatives 31 et 32 ; le nettoyage de l'unité de climatisation 17 s'effectue simultanément à celui de l'enceinte 2, de manière à réduire au minimum la durée d'immobilisation de l'installation.

L'installation selon l'invention s'applique, en particulier, à l'égouttage des fromages à pâtes molles, déposés à l'intérieur de blocs-moules à alvéoles multiples, assemblés en couches multiples permettant de constituer les piles de blocs-moules 5 précédemment considérées.

L'on ne s'éloignerait pas du cadre de l'invention, telle que définie dans les revendications annexées, en modifiant :
- les détails des différents convoyeurs et autres moyens de transfert des piles de blocs-moules ;
- le nombre de tunnels d'égouttage regroupés ;
- les moyens utilisés pour le chargement/déchargement de ces tunnels d'égouttage.

## Revendications

1. Installation mécanisée pour l'égouttage de fromages en cours de fabrication, du genre « tunnel d'égouttage » avec une enceinte climatisée (2) prévue pour recevoir des piles de blocs-moules (5) positionnées et déplaçables le long de voies de déplacement (8, 9), **caractérisée en ce qu**'elle comprend, à l'opposé d'une extrémité de l'enceinte (2) pourvue d'une porte d'entrée (4) pour le chargement/déchargement des piles de blocs-moules (5), une unité de climatisation (17) avec ventilateurs (19, 20), buses de pulvérisation d'eau (22) et batterie de chauffage/refroidissement (24), l'unité de climatisation (17) assurant la reprise de l'air (en 18) à une extrémité d'un espace libre inférieur (29) s'étendant sur la longueur de l'enceinte (2), sous les emplacements occupés par les piles de blocs-moules (5), et ladite unité de climatisation (17) possédant, en partie haute, une sortie (25, 26) en communication avec une chambre de répartition d'air (27) située en partie haute du tunnel d'égouttage, la chambre de répartition (27) étant délimitée à sa base par des panneaux perforés (28) ou des grilles de diffusion d'air surmontant les emplacements occupés par les piles de blocs-moules (5).

2. Installation pour l'égouttage de fromages selon la revendication 1, **caractérisée en ce qu'**elle comprend, pour la conduite automatique de l'égouttage, un dispositif de pesée (10) des piles de blocs-moules (5) à l'intérieur de l'enceinte climatisée (2), et une sonde de température/hygrométrie (30) située dans la chambre de répartition d'air (27).

3. Installation pour l'égouttage de fromages selon la revendication 1 ou 2, **caractérisée en ce qu'**elle comprend un retoumeur motorisé (11 à 14), placé à l'intérieur de l'enceinte climatisée (2) sur le circuit de déplacement des piles de blocs-moules (5), pour le retournement automatique de chaque pile de blocs-moules (5).

4. Installation pour l'égouttage de fromages selon la revendication 3, **caractérisée en ce que** le retourneur (11) comprend une cage (12) montée rotative autour d'un axe horizontal (13), et un moto-réducteur (14) d'entraînement en rotation de la cage (12).

5. Installation pour l'égouttage de fromages selon la revendication 2, et la revendication 3 ou 4, **caractérisée en ce que** le circuit de déplacement des piles de blocs-moules (5), à l'intérieur de l'enceinte climatisée (2), est un circuit fermé qui comprend un premier chariot de transfert (6) à déplacement transversal, situé à l'extrémité de l'enceinte (2) pourvue de la porte d'entrée (4), un second chariot de transfert (7) à déplacement transversal, situé vers l'extrémité opposée de l'enceinte (2), pourvue de l'unité de climatisation (17), un convoyeur longitudinal « aller » (8) et un convoyeur longitudinal « retour » (9), le dispositif de pesée (10) étant associé au premier chariot de transfert (6), et le retoumeur (11) étant placé entre ce premier chariot de transfert (6) et l'extrémité amont du convoyeur longitudinal « aller » (8).

6. Installation pour l'égouttage de fromages selon la revendication 5, **caractérisée en ce que** les convoyeurs longitudinaux « aller » (8) et « retour » (9), pour le transfert des piles de blocs-moules (5), sont des convoyeurs du type pas à pas, à lignes de galets ou à chaînes, prévus pour positionner et déplacer les piles de blocs-moules (5) à une hauteur prédéterminée, avec une distance verticale (D) faible, en partie haute, entre les panneaux perforés (28) ou grilles de diffusion d'air, d'une part, et les sommets des piles de blocs-moules (5), d'autre part.

7. Utilisation de l'installation pour l'égouttage de fromages selon l'une quelconque des revendications 1 à 6, avec un robot de transfert (15) extérieur, équipé d'un chariot porte-piles (16) pour le chargementl déchargement des piles de blocs-moules (5) au travers de la porte d'entrée (4) de l'enceinte climatisée (2) de l'installation, le robot de transfert (15) étant de préférence commun à plusieurs tunnels d'égouttage disposés parallèlement.

## Claims

1. Mechanised installation for straining cheeses during manufacture, of the "straining tunnel" type with an air conditioned enclosure (2), designed to receive stacks of mould blocks (5) positioned on and able to move along movement tracks (8, 9), **characterised in that** it comprises, opposite to one end of the enclosure (2) provided with an entry door (4) for the loading/unloading of the stacks of mould blocks (5), an air conditioning unit (17) with fans (19, 20), water atomisation nozzles (22) and a heating/cooling battery (24), the air conditioning unit (17) providing the take up of the air (at 18) at one end of a lower free space (29) extending over the length of the enclosure (2), under the locations occupied by the stacks of mould blocks (5), and the said air conditioning unit (17) possessing, at its top part, an outlet (25, 26) in communication with an air distribution chamber (27) situated at the top part of the straining tunnel, the distribution chamber (27) being delimited at its base by perforated panels (28) or air distribution grilles surmounting the locations occupied by the stacks of mould blocks (5).

2. Installation for straining cheeses according to claim 1, **characterised in that** it comprises, for the automatic conduct of the straining, a device (10) for weighing the stacks of mould blocks (5) inside the air-conditioned enclosure (2), and a temperature/hygrometry sensor (30) situated in the air distribution chamber (27).

3. Installation for straining cheeses according to claim 1 or 2, **characterised in that** it comprises a motorised turnover manipulator (11 to 14) placed inside the air conditioned enclosure (2) on the movement circuit for the stacks of mould blocks (5), for automatically turning over each stack of mould blocks (5).

4. Installation for straining cheeses according to claim 3, **characterised in that** the turnover manipulator (11) comprises a cage (12) mounted so as to rotate about a horizontal axis (13), and a geared motor (14) for rotationally driving the cage (12).

5. Installation for straining cheeses according to claim 2 and claim 3 or 4, **characterised in that** the circuit for moving the stacks of mould blocks (5) inside the air-conditioned enclosure (2) is a closed circuit that comprises a first transverse-movement transfer carriage (6), situated at the end of the enclosure (2) provided with the entry door (4), a second transverse-movement transfer carriage (7) situated towards the opposite end of the enclosure (2) provided with the air conditioning unit (17), a longitudinal "outward" conveyor (8) and a longitudinal "return" conveyor (9), the weighing device (10) being associated with a first transfer carriage (6) and the turnover manipulator (11) being placed between this first transfer carriage (6) and the upstream end of the longitudinal "outward" conveyor (8).

6. Installation for straining cheeses according to claim 5, **characterised in that** the longitudinal "outward" (8) and "return" (9) conveyors for transferring the stacks of mould blocks (5) are conveyors of the stepping type, with lines of rollers or with chains, provided for positioning and moving the stacks of mould blocks (5) at a predetermined height, with a low vertical distance (D), at the top part between the perforated panels (28) or distribution grilles on the one hand and tops of the stacks of mould blocks (5) on the other hand.

7. Use of the installation for straining cheeses according to any one of claims 1 to 6, with an external transfer robot (15), equipped with a stack-carrying carriage (16) for loading/unloading the stacks of mould blocks (5) through the entry door (4) of the air-conditioned enclosure (2) of the installation, the transfer robot (15) preferably being common to several straining tunnels disposed in parallel.

## Patentansprüche

1. Automatische, mechanische Anlage zur Entwässerung von Käse während der Fabrikation in der Ausführungsart "Entwässerungstunnel" mit einem klimatisierten Raum (2), der dafür vorgesehen ist, Stapel von Formenblöcken (5) aufzunehmen, die Fortbewegungsbahnen (8, 9) entlang angeordnet und verschiebbar sind, **dadurch gekennzeichnet, dass** sie gegenüber einem Ende des Raumes (2), das mit einer Eingangstür (4) für das Beschicken mit Stapeln von Formenblöcken bzw. das Entladen dieser versehen ist, ein Klimaaggregat (17) mit Ventilatoren (19, 20), Wasserzerstäuberdüsen (22) und Heiz/Kühl-Batterie (24) umfasst, wobei das Klimaaggregat (17) die Aufnahme der Luft (in 18) an einem Ende eines unteren freien Raumes (29), der sich über die Länge des Raumes (2) unter den Plätzen, die von den Stapeln der Formenblöcke (5) eingenommen werden, erstreckt, sicherstellt, und wobei das Klimaaggregat (17) im oberen Teil einen Auslass (25, 26) aufweist, der mit einer Verteilkammer (27) verbunden ist, die sich im oberen Teil des Entwässerungstunnels befindet, wobei die Verteilkammer (27) an ihrer Unterfläche durch perforierte Platten (28) oder Luftverteilungsgitter begrenzt ist, die die von den Stapeln der Formenblöcke (5) eingenommenen Plätze überwölben.

2. Anlage zur Entwässerung von Käse nach Anspruch 1, **dadurch gekennzeichnet, dass** sie für die automatische Durchführung der Entwässerung eine Vorrichtung (10) zum Wägen der Stapel der Formenblöcke (5) im Inneren des klimatisierten Raumes (2) und eine Temperatur/Luftfeuchte-Messsonde (30), die sich in der Verteilkammer (27) befindet, umfasst.

3. Anlage zur Entwässerung von Käse nach Anspruch 1 oder 2, **dadurch gekennzeichnet, dass** sie eine motorisierte Wendevorrichtung (11 bis 14) umfasst, die für das automatische Wenden jedes Stapels der Formenblöcke im Inneren des klimatisierten Raumes (2) auf der Fortbewegungsbahn der Stapel der Formenblöcke (5) angeordnet ist.

4. Anlage zur Entwässerung von Käse nach Anspruch 3, **dadurch gekennzeichnet, dass** die Wendvorrichtung (11) einen Käfig (12), der drehbar um eine horizontale Achse (13) angebracht ist, und einen Getriebemotor (14), der den Käfig (12) zu einer Drehbewegung antreibt, umfasst.

5. Anlage zur Entwässerung von Käse nach Anspruch 2 und Anspruch 3 oder 4, **dadurch gekennzeichnet, dass** die Fortbewegungsbahn der Stapel der Formenblöcke (5) im Inneren des klimatisierten Raumes (2) eine geschlossene Bahn ist, die einen ersten Querbewegungs-Transportwagen (6), der sich an dem Ende des Raumes (2) befindet, das mit der Eingangstür (4) versehen ist, einen zweiten Querbewegungs-Transportwagen (7), der sich nahe dem gegenüberliegenden Ende des Raumes (2) befindet, das mit dem Klimaaggregat (17) versehen ist, einen "Vorwärts"-Längsförderer (8) und einen "Rückwärts"-Längsförderer (9) umfasst, wobei die Wägevorrichtung (10) dem ersten Transportwagen (6) zugeordnet ist und die Wendevorrichtung (11) zwischen diesem ersten Transportwagen (6) und dem flussaufwärtigen Ende des "Vorwärts"-Längsförderer (8) angeordnet ist.

6. Anlage zur Entwässerung von Käse nach Anspruch 5, **dadurch gekennzeichnet, dass** der Vorwärts"-Längsförderer (8) und der "Rückwärts"-Längsförderer (9) für den Transport der Stapel der Formenblöcke (5) Förderer vom schrittweisen Typ mit Rollenstrecken oder mit Ketten sind, die vorgesehen sind, um die Stapel der Formenblöcke (5) vorgegebener Höhe mit einem geringen vertikalen Abstand (D) im oberen Teil, zwischen den perforierten Platten (28) oder Luftverteilungsgittern einerseits und den Oberseiten der Stapel der Formenblöcke (5) andererseits, zu positionieren und fortzubewegen.

7. Verwendung der Anlage zur Entwässerung von Käse nach einem der Ansprüche 1 bis 6 mit einem außenseitigen Transportroboter (15), der mit einem Stapeltransportwagen (16) für die Beschickung mit Stapeln der Formenblöcke (5) bzw. ihre Entnahme durch die Eingangstür (4) des klimatisierten Raumes (2) der Anlage ausgerüstet ist, wobei der Transportroboter (15) vorzugsweise mehreren parallel angeordneten Entwässerungstunneln gemeinsam ist.
